(19) Europäisches Patentamt
European Patent Office
Office européen des brevets

(11) **EP 0 616 692 B1**

(12) **EUROPÄISCHE PATENTSCHRIFT**

(45) Veröffentlichungstag und Bekanntmachung des Hinweises auf die Patenterteilung:
**16.04.1997 Patentblatt 1997/16**

(21) Anmeldenummer: **93901586.3**

(22) Anmeldetag: **11.12.1992**

(51) Int Cl.6: **G01N 29/10**, G01N 17/00

(86) Internationale Anmeldenummer:
**PCT/DE92/01034**

(87) Internationale Veröffentlichungsnummer:
**WO 93/12420 (24.06.1993 Gazette 1993/15)**

(54) **VERFAHREN ZUR KOMPRESSION DER DATEN IN EINEM ULTRASCHALLMOLCH**

METHOD OF COMPRESSING DATA IN AN ULTRASONIC PIPE-INSPECTION PROBE

PROCEDE DE COMPRESSION DES DONNEES DANS UNE SONDE A ULTRA-SONS

(84) Benannte Vertragsstaaten:
FR GB

(30) Priorität: **13.12.1991 DE 4141123**

(43) Veröffentlichungstag der Anmeldung:
**28.09.1994 Patentblatt 1994/39**

(73) Patentinhaber: **Forschungszentrum Karlsruhe GmbH**
**76133 Karlsruhe (DE)**

(72) Erfinder:
• **OTTES, Josef-Georg**
**D-7520 Bruchsal 5 (DE)**

• **STRIPF, Helmut**
**D-7514 Eggenstein-Leopoldshafen (DE)**

(74) Vertreter: **Rückert, Friedrich, Dr. et al**
**Forschungszentrum Karlsruhe GmbH**
**Stabsabteilung**
**Patente und Lizenzen**
**Weberstrasse 5**
**76133 Karlsruhe (DE)**

(56) Entgegenhaltungen:
DE-A- 3 638 936        US-A- 4 953 405

**Beschreibung**

Die Erfindung betrifft ein Verfahren zur Kompression von aus Meßwerten gewonnenen Daten in einem Ultraschallmolch, der Korrosion oder sonstige Abnormalitäten an einer Rohrwand detektiert. Diese Daten werden aus Ultraschall-Laufzeitmeßwerten gebildet, die über Ultraschallsensoren erfaßt werden, die zu einem Modul oder Modulen zusammengefaßt sind. Der Modul bzw. die Module befinden sich hierzu auf einem vorgegebenen Umfangsbereich des Ultraschallmolchs, mit dem sie an der Rohrinnenwand der zu untersuchenden Pipeline entlang gleiten. Die Ultraschallsensoren senden mit einer auf die Molchgeschwindigkeit abgestimmten Wiederholfrequenz einen Ultraschallimpuls und empfangen das Echo von der Rohrinnenwand und -außenwand. Durch Laufzeitdifferenzbildung läßt sich unter Berücksichtigung der Schallgeschwindigkeit die verbliebene Wanddicke des Pipelinerohres flächendeckend detektieren. Aufgrund des Signal/Rauschverhältnisses werden vorzugsweise die jeweils ersten Echos verwendet.

Die aus den Meßwerten gebildeten Daten werden während der Fahrt des Ultraschallmolches in einem Speicher abgelegt. Die anfallende Datenflut ist groß. Ohne Kompression der Daten stößt man von der Speichermöglichkeit her rasch an Grenzen und engt die Durchfahrlänge des Molches in einer Pipeline erheblich ein.

Nun ist davon auszugehen, daß eine Pipeline in Betrieb üblicherweise weite Strecken hat, entlang denen die Rohrwand weitgehend unversehrt bzw. in einem unbedenklichen Zustand ist. Man wird dort davon natürlich nicht alle Meßwerte speichern, sondern den tolerabel schwankenden durch einen stellvertretenden ersetzen. Beim Auslesen der Daten aus dem Speicher des Ultraschallmolchs nach Beendigung des Durchlaufs durch die Pipeline soll ihr Zustand aus den Daten natürlich lückenlos wiedergegeben werden können.

In der DE 3638936 ist ein Verfahren beschrieben bei dem die Daten derart komprimiert werden, das von einem Meßwert in einem vorbestimmten Rahmen (Toleranzband) abweichende nachfolgende Meßwerte lediglich gezählt und ihrer Anzahl nach erfaßt und abgespeichert werden. Durch den vorbestimmten Rahmen ergibt dieses Verfahren bei Wandstärkeänderungen oder Sensorträger-abrieb schlechte oder keine Einsparung, da in diesen Fällen die Meßwerte außerhalb des vorbestimmten Rahmens liegen. Außerdem kann bei diesem Verfahren der vorbestimmte Rahmen in den zur Korrosionsmessung wichtigen Meßwertebereich fallen und somit die quantitative Korrosionsbestimmung verschlechtern.

Bekannte Kompressionsverfahren werden in DATACOM /91, Seite 88 ff beschrieben und erläutert. Am besten ist z.B. die Huffmann-Codierung geeignet (siehe S 94, Spalte 2 und 3 sowie Seite 96, Spalte 1 und 2). Diese Verfahren berücksichtigen aber die physikalischen Gesetzmäßigkeiten der Ultraschalltechnik nicht. Demzufolge werden damit auch keine hohen Einsparungen erzielt.

Das allgemeine Prinzip der Datenkompression besteht darin, möglichst redundante Information zu vermeiden und häufig auftretende Werte durch kurze Codewörter zu ersetzen. Um den Kompressionsgrad zu optimieren, bedarf es möglichst genauer Kenntnisse der Datenstruktur. Der Grad der Kompression wird vom Algorithmus und von der Varianz der Daten bestimmt.

Die Ultraschalldaten werden z. B. in einem 12-Bit Datenformat erfaßt. Die erste Stufe der Kompression beinhaltet eine Datenreduktion. Aus dem 12-Bit Datenformat wird die Information ausgewählt, die für die spätere Korrosionsbestimmung notwendig ist. Dazu genügt ein 7-Bit Datenformat, eine Untermenge des 12-Bit Datenformates. Dieses Datenformat beschreibt bei einer vorgegebenen Auflösung einen definierten Wertebereich.

Jeder von einem Kompressionsrechner erfaßte Datensatz von jeweils 64 Vorlauf- und Wandstärkenwerten wird als ein Datensatz angesehen und komprimiert. Die Kompression geht von der Annahme aus, daß Pipelines über weite Strecken keine Korrosion aufweisen und sich entsprechende Meßwerte daher nicht oder nur innerhalb eines schmalen Toleranzbandes unterscheiden. Dieses Toleranzband wird erzeugt, indem um einen vorher ermittelten Referenzwert ein Fenster vordefinierter Breite gelegt wird. Mit dem Toleranzband wird die Rauhigkeit der Wandung und Unregelmäßigkeiten in der Rohrfertigung unterdrückt. Durch dieses Toleranz- oder Kompressionsfenster werden die Daten mit zwei verschiedenen Auflösungsbereichen aufgezeichnet: eine feine Auflösung für den Bereich der Korrosionsstelle und eine grobe Auflösung im Bereich der Nominalwandstärke bzw. des Nominalvorlaufes.

Das Prinzip des Kompressionsverfahren besteht darin, mehrfach hintereinander auftretende Werte, die innerhalb des Toleranzbandes liegen, mit Hilfe eines Multiplikators darzustellen. Die 7-Bit Datendarstellung erlaubt eine gesonderte Bedeutung des achten Bits eines Datenwortes. Das achte Bit wird als Präfix Bit verwendet, um die Interpretation des Datenwortes zu verändern. Die unteren sieben Bit enthalten dann nämlich keinen Meßwert, sondern einen Multiplikator, der die Anzahl der Meßwerte enthält, die innerhalb des vorgebbaren Toleranzbandes, das um den zugeordneten Referenzwert gebildet wird, liegen. Es kann sich maximal um 128, dies entspricht einer Binärdarstellung von 7 Bit, solcher Befunde handeln. Liegt der Meßwert außerhalb des Fensters, so wird sein Wert vollständig abgelegt. Das Präfix Bit ist dann nicht gesetzt. Die Multiplikatorzählung beginnt bie 80H, wobei 80H einem Multiplikator von 1 entspricht. Im günstigsten Fall, wenn alle Meßwerte innerhalb der Toleranzbanden liegen, wird somit nur ein Byte mit dem Wert 255 (=FFH) abgelegt. Der ungünstigste Fall ist, wenn alle Werte außerhalb der Toleranzbanden liegen oder jeweils ein Wert innerhalb eines Toleranzbandes einem oder mehreren Werten außerhalb der Toleranzbanden folgt. In beiden Fällen müssen 128 Bytes abgelegt werden.

Der Erfindung liegt die Aufgabe zugrunde, die Kompression von Daten im Speicher eines Ultraschallmolchs zu erhöhen, damit eine große Pipelinelänge uneingeschränkt und wirtschaftlich durchfahren werden kann, wobei die rauhen Umweltbedingungen bei der Speicherung der Daten besonders berücksichtigt werden müssen.

Diese Aufgabe wird erfindungsgemäß durch die im Anspruch 1 gekennzeichneten Merkmale gelöst. In den Unteransprüchen 2 bis 8 sind weitere vorteilhafte Verfahrensschritte zur optimalen Kompression von dekomprimierbaren Daten gekennzeichnet.

Die Meßwerte des Vorlaufes sind vom Abstand des Sensorträgers von der Rohrinnenwand, vom Abrieb des Sensorträgers während des Molchlaufes und vom inneren Zustand des zu messenden Rohrstückes abhängig. In der Regel ist für jeden Sensor die Grundeinstellung und der Abrieb des Sensorträgers verschieden. Daher wird für jeden Sensor ein eigener Vorlaufreferenzwert geführt. Dieser Referenzwert wird durch Mittelung gebildet, die während des gesamten Molchlaufes durchgeführt wird, so daß bei Abrieb die Referenzwerte automatisch gleitend nachgeführt werden.

Für die Wandstärkemessung wird für alle Sensoren nur ein Referenzwert geführt, da im Normalfall von allen Sensoren die gleiche Wandstärke gemessen wird. Der Wandstärkereferenzwert wird durch gleiche kontinuierliche Mittelung gebildet. Das Toleranzband wird beschrieben durch einen Referenzwert und ein Fenster, das in vordefinierten Einheiten symmetrisch um den Referenzwert gelegt wird.

Eine längere Sequenz von Ausfällen wird durch einen Multiplikator dargestellt: Als Präfix dient dann ein Datenwort, dem ein Wert zugeordnet wird, (1) der als Meßwert in Zusammenhang mit der Messung nicht sinnvoll ist. So entspricht der Meßwert "eins" einer Wanddicke von 0,2 mm oder einem Vorlaufwert von 0,34 mm. Diese Werte können aus physikalischen Gründen nicht gemessen werden.

Ergibt die Kompression mehrerer aufeinanderfolgender Datensätze eine Sequenz mit optimaler Kompression (= FFH), so können über ein Präfix Byte, das direkt den Synchronisations Bytes folgt, mehrere Datensätze über einen Multiplikator zusammengefaßt werden.

Der Kompressionsfaktor wird im wesentlichen durch die Datenstruktur bestimmt; diese ist stark von den Meßparametern abhängig und somit nicht vorhersehbar. Um die Daten einzelner Sensoren, die in einer Sequenz außerhalb des Toleranzbandes liegen, sich hier jedoch nicht ändern, besser komprimieren zu können, kann die Kompression in zwei alternativen Stufen durchgeführt werden. Stufe eins entspricht dem bisher beschriebenen Verfahren. In der zweiten Stufe dienen als Bezugswerte nicht wie in der ersten Stufe die Referenzwerte, sondern der entsprechende vorherige Wert des gleichen Sensors. Meßwerte innerhalb des Toleranzbandes werden durch den Referenzwert dargestellt. Divergieren zeitlich sich folgende korrespondierende Meßwerte, so werden sie vollständig (oder in der Differenz) abgelegt; gleiche Meßwerte werden wie bisher durch einen Multiplikator beschrieben. Werden Differenzen abgelegt, so können zwei sich in der Sensorreihe folgende Meßwertedifferenzen in einem Byte dargestellt werden.

Nach Beendigung der Stufe zwei wird anhand des jeweils erzielten Kompressionsfaktors entschieden, nach welchem Verfahren die komprimierten Daten abgespeichert werden. Der komprimierte Datensatz wird dann mit einer entsprechenden Kennung versehen. Da das Verfahren der Stufe zwei eine höhere Datenspeichersicherheit benötigt, wird dieses Verfahren nur bei einer wesentlichen Verbesserung der Kompression und bei Speichermedien mit hoher Datensicherheit eingesetzt.

Nach Beendigung eines Prüflaufes werden die Ultraschalldaten ausgewertet. Dazu müssen die Daten dekomprimiert werden. Ein Multiplikator wird dann durch die entsprechende Anzahl der zugeordneten Referenzwerte ersetzt.

Eine besondere Bedeutung ist der Gewinnung der Referenzwerte zuzuordnen. Es muß möglichst vermieden werden, daß das Toleranzband in den Meßwertebereich der Korrosionsstellen fällt, da sonst die quantitative Bestimmung der Korrosionsstellen mit ungenügender Auflösung getätigt werden muß. Der Referenzwert für die Wandstärke wird durch arithmetische Mittelung über eine definierte Anzahl von Datensätzen gebildet; er paßt sich so gleitend divergenten Wandstärken an. Echoausfälle (Meßwert 0) und Bereichsüberschreitungen (Meßwert 127) entfallen bei der Mittelung. Damit Meßwerteausreißer die Mittelung nicht beeinträchtigen, werden im ersten Schritt nur die Werte zur Mittelung herangezogen, die innerhalb des vorgegebenen Fensters liegen. Liegen mehr Werte außerhalb des Fensters als innerhalb (z.B. nach einer Wandstärkenänderung) so werden alle Werte des Datensatzes zur Mittelung benutzt.

Durch die in longitudinaler Richtung versetzte Anordnung der Sensoren auf dem Sensorträger kann bei, in Relation zur Toleranzbandbreite, großen Wandstärkeänderungen eine Treppenfunktion des Referenzwertes entstehen. Um zu verhindern, daß Korrosionsmessungen in diesem Bereich mit ungenügender Auflösung auszuführen sind, wird bei erkannter Wandstärkeänderung das Toleranzband kurzzeitig reduziert. Daher muß das Kompressionsverfahren fehlertolerant ausgelegt werden.

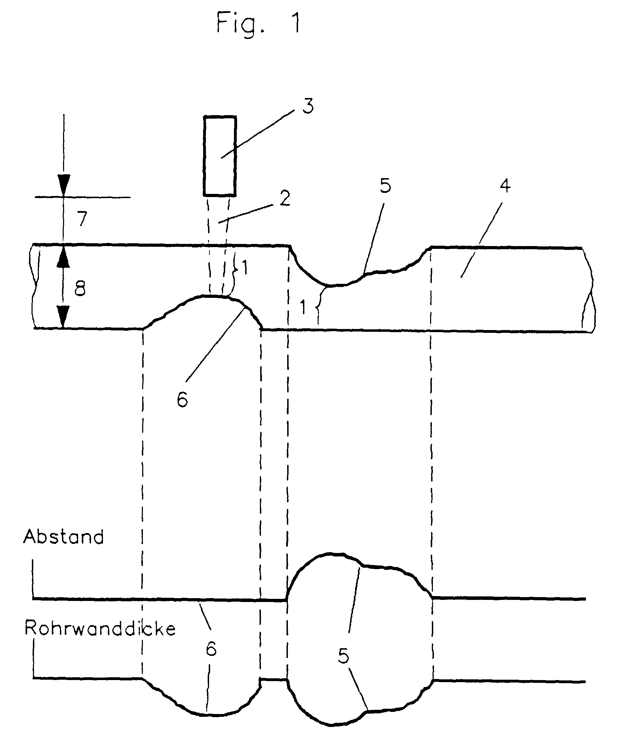

Die quantitative Bestimmung von Innenkorrosion anhand der Vorlaufdaten erfolgt durch eine relative Messung. Eine Innenkorrosion wird immer durch eine Zunahme des Vorlaufmeßwertes beschrieben (siehe Abb. 1). Zur quantitativen Berechnung werden zwei Vorlaufmeßwerte subtrahiert. Ein Meßwert entspricht dem Vorlaufwert an der Korrosionsstelle. Der zweite Meßwert entspricht dem Vorlaufwert bei defektfreiem Rohr. Bei defektfreiem Rohr wird der Vorlaufwert durch den Referenzwert angezeigt. Demzufolge müssen bei der Referenzwertermittlung für den Vorlauf die Meßwerte an Korrosionsstellen und bei Sensorträgeranhebungen ausgefiltert werden. Dies geschieht dadurch, das Meßwerte, die im Vergleich zum aktuellen Referenzwert eine Erhöhung anzeigen, (Korrosion oder Sensorträgeranhebung), zur Mittelung nicht herangezogen werden.

Bei Beginn eines Prüflaufes werden die Referenzwerte durch Mittelung über eine vorbestimmte Anzahl von Datensätzen erzeugt. Die folgenden Referenzwertberechnungen erfolgen während der Datenerfassung und der Kompression der Daten.

Bei jedem Kompressionsverfahren bedeutet der Datenverlust einzelner Informationseinheiten meistens einen um ein Vielfaches höheren Datenverlust oder höhere Datenverfälschung nach der Dekompression. Dies gilt insbesondere für den Datenverlust von Referenzwerten. Um eine möglichst hohe Sicherheit der Datenspeicherung zu erreichen, werden deshalb die Referenzwerte mehrfach redundant abgespeichert. Vor Beginn eines Datenblockes werden die Referenzwerte des Vorlaufes in zwei getrennten Datensätzen abgelegt. Sie sind dann für den gesamten Datenblock gültig. Da sich der Wandstärkereferenzwert des öfteren ändern kann, wird vorzugsweise jedem zehnten Datensatz der jeweils aktuelle Wandreferenzwert beigefügt.

An die Datenkompression werden, bedingt durch die physikalischen und technischen Randbedingungen der Ultraschallmessung in Pipelines, folgende Anforderungen gestellt werden:

- möglichst hoher Kompressionsgrad,
- Auflösung der Korrosionsstellenmessung: 0,2 mm für die Wandstärke bis 25 mm, 0,4 mm bei Wandstärken zwischen 25 und 50 mm und 0,34 mm für den Vorlauf,
- ein Algorithmus, der auch bei nicht wiederherstellbaren fehlerhaften Bandstellen, ein kurzes und möglichst fehlerloses Einsynchronisieren erlaubt (Fehlertoleranz).

Ein Ausführungsbeispiel der Erfindung ist in der Zeichnung skizziert und wird beschrieben. Zuvor sei zur Erläuterung ein Ultraschall-Meßvorgang beschrieben und auf die anfallende Flut an Meßwerten bei einem Prüflauf hingewiesen. Die Nützlichkeit der Datenkompression geht daraus hervor.

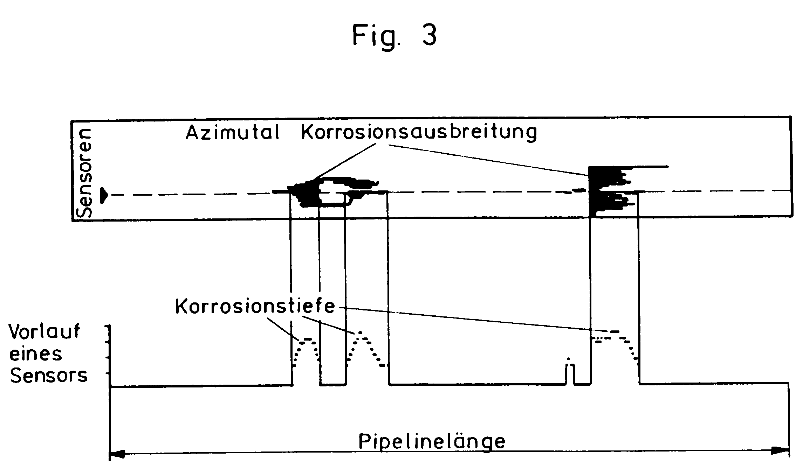

Nach Abschluß eines Molchlaufes werden die Dateien rechnergestützt ausgewertet. Dazu werden die Daten dekomprimiert. Das Rohr wird dabei in einer Ebene abgewickelt, wobei jeder Sensor als gerade Spur in Richtung der Rohrachse erscheint. Der jeweils vorliegende Meßwert wird durch verschiedene Farbabstufungen (in Fig. 3 Graustufen) dargestellt. Dadurch wird eine dreidimensionale Darstellung (C-Scan) erzielt. Zur quantitativen Bestimmung von Korrosionsabmessungen können einzelne Sensordaten in einer x-y-Darstellung (B-Scan) angezeigt werden.

Es zeigen:

Figur 1    Prinzip der Ultraschall (US)-Messung und Aufzeichnung des Meßvorgangs

Figur 2    Beispiel einer Kompression von Ultraschalldaten aus einem 16-Sensor-Modul.

Figur 3    zeigt die B- und C-Scan Darstellung der VorlaufDaten einer Korrosionsstelle mit nachfolgender Rundschweißnaht. Der B-Scan zeigt den Vorlaufreferenzwert, das Toleranzband und die zur Bestimmung der Korrosionsgeometrien notwendigen Meßwerte.

Für die Messung der Restwanddicke 1 korrodierter Pipelines wird das Ultraschall-System nach dem Prinzip des Ultraschall-Laufzeit-Verfahrens eingesetzt. Der Ultraschallsendeimpuls 2 aus einem Sensor 3 fällt senkrecht auf die Rohrwand 4. Pro Ultraschallimpuls werden jeweils zwei Laufzeiten ermittelt, und zwar:

Vorlauf zwischen Sendeimpuls und Schalleintrittsimpuls; Laufzeit zwischen Schalleintrittsimpuls und erstem Rückwandecho oder Laufzeit in der Rückwandechofolge.

Aus der Laufzeitdifferenz zwischen Vorderwand- und Rückwandecho wird die Restwandstärke 1 bestimmt. Figur 1 zeigt das Meßprinzip.

Über den Abstand 7 zwischen Sensor 3 und Rohrwand Vorlauf kann eine Aussage über die Art der Korrosion getroffen werden. Bei einer Innenkorrosion 5 vergrößert sich dieser Abstand 7, bleibt er gleich bei kleiner werdender Wanddicke 8, so liegt der Defekt 6 außen, also eine Außenkorrosion 6.

Die Innenkorrosion 5 kann dementsprechend über Änderung der Vorlaufstrecke und über die Wanddickenmessung bestimmt werden. Die Bestimmung von Innenkorrosion 5 über den Vorlauf ist ein relatives Meßverfahren, während die Wanddickenmessung ein absolutes Meßverfahren ist.

Aus physikalischen Gründen ist die Impulsamplitude des Vorderwandechos immer größer als die Impulsamplitude des Rückwandechos. An stark korrosiven Flächen wird der Ultraschallimpuls geschwächt und gestreut, so daß des öfteren nur noch eine Vorlaufmessung durchgeführt werden kann.

Um die Rohrwand flächendeckend auszuleuchten, muß man eine der Sensorausleuchtungsfläche entsprechende Anzahl von Sensoren in azimutaler Richtung nebeneinander anbringen, die alle nacheinander gefeuert werden und ihre Information liefern. Sorgt man für eine zur Molchgeschwindigkeit passende Wiederholfrequenz bei der Ultraschall-Erzeugung, so kann man auch in Längsrichtung eine lückenlose Prüfung erreichen. Eine solche gleichzeitige Azimutal- und Longitudinalerfassung des Rohrwandzustandes ist in Figur 3 dargestellt. Die obere, schattenartige Darstellung zeigt qualitativ den azimutalen Zustand der Rohrwand über der Rohrlänge. Die untere Darstellung zeigt den quantitativen Verlauf der Rohrwandstärke entlang einer, der mit Pfeil angedeuteten Sensorspur. Die Zuordnung der azimutalen oder flächigen Darstellung aus den Signalen der azimutal verteilten Sensoren zu dem Signalverlauf aus einem bestimmten Sensor daraus ist über Strichlinien angedeutet. Über Farbabstufungen im Computerausdruck läßt sich für die Azimutalerfassung aber auch eine Quantifizierung der Korrosionstiefe in der Rohrwand darstellen.

Die erfaßten Meßwerte müssen zur späteren Auswertung aufbewahrt werden. Dazu bedarf es eines Massenspeichers, der eine sehr hohe Speicherkapazität besitzt, wie man aus der untenstehenden Abschätzung sehen kann:

Es soll eine Leitung von 200 km Länge untersucht werden, der Durchmesser sei so, daß 512 gleichmäßig am Umfang verteilte Sensoren benötigt werden. Wenn der "Molch" sich mit einer Geschwindigkeit von lm/sec fortbewegt und die Ultraschall Sensoren mit einer Frequenz von 400 Hz erregt werden, dann ergibt das eine Datenmenge von

```
N       =    512     *    2      *    400      *    200 000

Byte         Anzahl       Vorlauf+      Wiederhol-        Reisezeit bei
             Sensoren     1.Rückwand    frequenz          Vorschub von
                                        Echo              1 m/sec

        =    81,9 GByte
```

Diese Datenmenge kann mit den zur Zeit verfügbaren Datenspeichersystemen, bei vorgegebenen Molchkörpervolumen, nicht direkt abgelegt werden. Nun wird normalerweise eine Rohrleitung, wie gesagt, über weite Strecken noch gesund sein und keine Korrosion aufweisen. Daher kann man eine Datenkompression durchführen, die die Menge der zu speichernden Information stark reduziert.

Das Ultraschallmeßsystem ist in Module mit vorzugsweise 16, 32 oder 64 Sensoren unterteilt. Je nach Pipelinedurchmesser werden bis zu 8 solcher Module eingesetzt. Die einzelnen Sensoren eines Moduls werden sequentiell mit einer Wiederholfrequenz von bis zu 400 Hz angesteuert.

Die Daten eines Sensor-Modules werden von einem Kompressionsrechner übernommen, komprimiert und mit einer entsprechenden Kennung, "Checksum" und Synchronzeichen versehen, einem Aufzeichnungsrechner übergeben. Der Aufzeichnungsrechner fügt die Daten verschiedener Kompressionsrechner zu Blöcken von ca. 1.8 MByte Länge zusammen und legt diese in einem definierten Format auf einem Bandspeicher ab.

Für eine 64-Sensor-Ultraschalleinheit enthält ein Datensatz 64 Vorlauf- und 64 Wandstärkewerte. Diese Daten werden vom Kompressionsrechner erfaßt und sequentiell, entsprechend der Sensornummer, abgelegt.

```
V1   j         Vorlauf 1. Sensor
W1   j         Wandstärke 1. Sensor
V2   j         Vorlauf 2. Sensor
W2   j         Wandstärke 2. Sensor
        .
        .
        .
V64  j         Vorlauf 64. Sensor
W64  j         Wandstärke 64. Sensor

j = Satznummer, zählend ab Beginn de Datenaufzeichnung
```

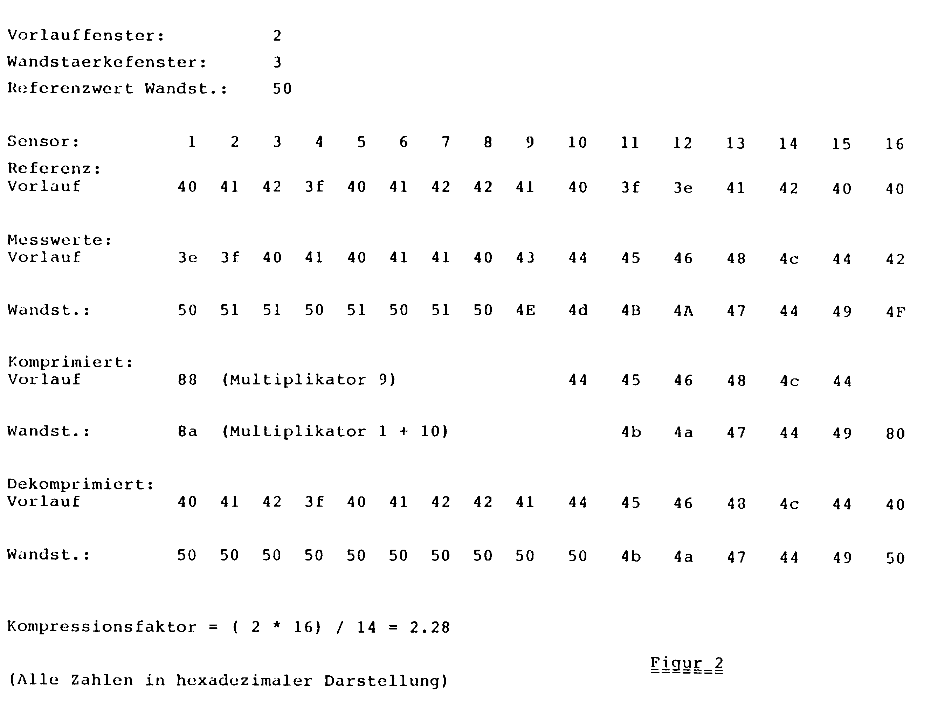

Figur 2 zeigt ein Beispiel für das Kompressionsverfahren. Der dargestellte Datensatz besteht hier aus 16 Wertepaaren. Das Vorlauffenster beträgt 2 Einheiten; das Wandstärkefenster beträgt 3 Einheiten.

Die Einsparung für einen Datensatz mit 2 * z Werten, die mit diesem Kompressionsverfahren erreicht wird, läßt sich durch folgende Formel beschreiben:

$$\text{Einsparung } E \; = \; \sum_{k=1}^{z} \; Ak \; * \; (k-1)$$

Ak = Anzahl der Gruppen zu k Werten innerhalb des Toleranzbandes.

Diese Formel zeigt, das die Einsparung am höchsten ist, wenn k sehr groß ist. Wenn k = 1 (Folge: Wert außerhalb, Wert innerhalb, Wert außerhalb) kann keine Einsparung erzielt werden. Die maximale Einsparung für einen Datensatz beträgt 127.

Der Kompressionsgrad KG für einen einzelnen Datensatz mit 2 * z Werten errechnet sich zu

$$KG = 2 * z / (2 * z - E)$$

Er beträgt im günstigsten Fall: KG = 2 x z.

Für das Beispiel in Fig. 2 beträgt die Einsparung

$$E = 1 * (9 - 1) + 1 * (11 - 1) + 1 * (1 - 1) = 18$$

Der Kompressionsgrad beträgt:

$$KG = 32 / 14 = 2.28$$

Um eine möglichst hohe Einsparung zu erzielen, werden physikalische Gesetzmässigkeiten, resultierend aus der Ultraschalltechnik und aus der Konstruktion des Sensorträgers, ausgenutzt, um die Daten optimal für die Kompression vorzubereiten:

- Im Nachbarbereich von Schweißnähten wird der Sensorträger leicht angehoben; dies bewirkt eine Erhöhung des Vorlaufes, jedoch keine Veränderung der Wandstärkewerte. Durch Umorganisation der Daten, wobei zuerst die Vorlaufdaten und danach die Wandstärkedaten komprimiert werden, läßt sich die Einsparung E erhöhen.

- Im Bereich von Rohrinstallationen und bei Verschmutzung oder Ausfall einzelner Sensoren wird für den Vorlauf wie für die Wandstärke kein Ultraschallecho empfangen. Ein Ausfall wird durch den Meßwert 0 angezeigt. Bei Vorlaufausfall kann aus physikalischen Gründen kein Wandstärkeecho empfangen werden. Somit kann der Kompressionsalgorithmus, bei erkanntem Vorlaufausfall, den Wandstärkewert (0) als Wert innerhalb des Toleranzbandes betrachten und dadurch einen höheren Kompressionsgrad erzielen.

Das beschriebene Kompressionsverfahren wird zur Prüfung von Rohrleitungen eingesetzt. Die in einem Prüflauf zu messende Rohrleitungslänge betrug bis zu 200 km. Im Mittel über ca. 70 Prüfläufe wurde eine Kompression vom Faktor 8 erzielt. Ein mit dem Faktor 9 komprimierter Datenblock wurde nach der Dekompression mit dem Huffmann Verfahren komprimiert. Dabei wurde lediglich ein Kompressionsfaktor 4 erreicht.

**Bezugszeichenliste:**

1 Restwanddicke
2 Ultraschallsendeimpuls
3 Sensor
4 Rohrwand
5 Innenkorrosion
6 Defekt, Außenkorrosion
7 Abstand
8 Wanddicke

**Patentansprüche**

1. Verfahren zur Kompression von Daten, die aus flächendeckenden, mit einer vorgegebenen Wiederholfrequenz erfolgenden Ultraschall-Laufzeitmessungen über einen durch ein Rohr gleitenden Meßmolch zur Messung von Korrosion und sonstigen Rohrabnormitäten gewonnen werden, wobei von einem Ultraschallsensormodul pro Ultraschallsensor die Laufzeit zwischen einem Sendeimpuls und dem ersten davon herrührenden Schalleintrittsimpuls, dem Vorderwandecho, sowie die Laufzeit zwischen Schalleintrittsimpuls und einem ersten Rückwandecho, aus der Laufzeitdifferenz zwischen Sendeimpuls und Vorderwandecho der Vorlauf erfaßt und aus der Laufzeitdifferenz zwischen Vorderwandecho und Rückwandecho die Restwandstärke bestimmt wird, und aus den Meßwerten, die innerhalb und außerhalb eines vorgegebenen Toleranzbandes auftreten, das durch einen Referenzwert und ein Fenster beschrieben wird, das in vordefinierten Einheiten symmetrisch um den Referenzwert liegt, dem jeweiligen Sensor zugeordnet, nach einer Analog-Digital-Wandlung Datenwerte gleichen Formats gebildet und diese Daten eine dekomprimierbare Kompression erfahren, wobei die Daten aus der Ultraschall-Laufzeitmessung für den Vorlauf und die Wandstärke mit zwei verschiedenen Auflösungsbereichen aufgezeichnet werden, in einen groben Auflösungsbereich für Meßwerte innerhalb des Toleranzbandes einen hohen Auflösungsbereich für Meßwerte außerhalb des Toleranzbandes, wobei das Datenformat ein Bit, das Präfixbit, enthält, das im Fall eines außerhalb des Toleranzbandes liegenden Meßwertes nicht gesetzt und das zum Meßwert gehörende Datenwort, der Wert, vollständig abgelegt wird, und das im Fall von mindestens zwei aufeinanderfolgenden, innerhalb des Toleranzbandes liegenden Meßwerten gesetzt wird und damit eine Multiplikatorzählung für diesen Wert anstelle der aufeinanderfolgenden interpretiert wird, **dadurch gekennzeichnet**, daß

    - das Toleranzband bei erkannter Wandstärkeänderung kurzzeitig eingeengt wird, damit die Auflösung der Messung der in diesem Bereich möglicherweise vorhandenen Korrosion nicht verringert wird,

    - eine längere Folge von einem Ausfall eines Sensors oder von Ausfällen von Sensoren durch einen Multiplikator dargestellt wird und das Präfixbit einem Wert vorangestellt ist, dem ein Meßwert zugeordnet wird, der im Zusammenhang mit der Ultraschallmessung mit dem Meßmolch physikalisch nicht sinnvoll ist,

    - in einer zweiten Stufe der Kompression zwei oder mehr aufeinanderfolgende komprimierte gleiche Datensätze durch einen Kennzeichnungswert und einen Multiplikationswert nochmals komprimiert werden;

    - ein Ausfall eines Sensors im Vorlauf im Zusammenhang mit der Messung einen Meßwerteausfall in der Wandstärke bedeutet und dadurch der Wandstärkewert als Wert innerhalb des Toleranzbandes betrachtet wird, wodurch sich ein höherer Kompressionsgrad ergibt,

    - für jeden Sensor ein eigener Vorlaufreferenzwert geliefert wird, der während eines Molchlaufs durch fortlaufende Mittelung einer definierten Anzahl von Vorlaufwerten ständig aktualisiert und mehrfach redundant abgespeichert wird,

    - für die Wandstärkemessung für alle Sensoren eines Molchs nur ein Referenzwert, der Wandstärkereferenzwert, geführt wird, der durch kontinuierliche arithmetische Mittelung von einer definierten Anzahl aufeinanderfolgender Datensätze während des Molchlaufs ständig aktualisiert und so gleitend sich ändernden Wandstärken angepaßt und mehrfach redundant abgespeichert wird, und alle außerhalb des Toleranzbandes liegenden Werte eines Datensatzes zur Mittelung herangezogen werden, falls das mehr Werte sind als innerhalb liegen,

    - Echoausfälle, d.h. Meßwert O, bei der Mittelwertbildung für Referenzwerte nicht verwendet werden,

    - Bereichsüberschreitungen (Meßwert 127) bei der Mittelwertbildung nicht verwendet werden.

2. Verfahren nach Anspruch 1, **dadurch gekennzeichnet**, daß das Toleranzband durch den Vorlaufreferenzwert und ein symmetrisch darum gelegtes Fenster vorgegebener Breite beschrieben wird.

3. Verfahren nach Anspruch 2, **dadurch gekennzeichnet**, daß die Breite des Toleranzbandes so ausgewählt wird, daß es nicht in den Meßwertbereich von Korrosionsstellen fällt, die aufgrund ihres fortgeschrittenen Korrosionsgrades erfaßt werden müssen.

4. Verfahren nach Anspruch 3, **dadurch gekennzeichnet**, daß zu Beginn eines Prüflaufes die Referenzwerte durch Mittelung über eine vorbestimmte Anzahl von Datensätzen erzeugt wird und die Referenzwertberechnung parallel zur Datenerfassung und Datenkompression erfolgen.

5. Verfahren nach Anspruch 4, **dadurch gekennzeichnet**, daß die Referenzwerte des Vorlaufs vor Beginn eines abzulegenden Datenblocks in zwei getrennten Datensätzen abgelegt werden und damit für den gesamten Datenblock gültig wird.

6. Verfahren nach Anspruch 5, **dadurch gekennzeichnet**, daß jedem 10-ten Datensatz oder einer zweckmäßigen Anzahl der jeweils aktuelle Wandreferenzwert beigefügt wird.

7. Verfahren nach Anspruch 6, **dadurch gekennzeichnet**, daß die Kompression der Daten in Echtzeit durchgeführt wird.

8. Verfahren nach Anspruch 1, **dadurch gekennzeichnet**, daß in einer alternativ weiteren Kompressionsstufe die Bezugswerte zur Kompression aus den zeitlich vorhergehenden Datensatz gebildet werden, wobei entsprechend dem Kompressionsgrad entschieden wird, nach welchen Kompressionsverfahren die komprimierten Daten abgelegt werden.

## Claims

1. Method of compressing data obtained from ultrasonic transit time measurements over a broad surface, which measurements are effected at a prescribed repeat frequency, via a measuring probe, which slides through a pipe, to measure corrosion and other pipe abnormalities, the transit time between a sending pulse and a first sound pulse arising therefrom, the front wall echo, and the transit time between the sound pulse and a first rear wall echo being detected by one ultrasonic sensor module per ultrasonic sensor, the prerun being detected from the difference in transit time between the sending pulse and the front wall echo, and the remaining wall thickness being determined from the difference in transit time between the front wall echo and the rear wall echo, and data values of identical format being formed from the measurement values occurring inside and outside a prescribed tolerance band, which is described by a reference value and a window, which lies in predefined units symmetrically around the reference value, associated with the particular sensor, after an analog-digital conversion, and such data undergoes a decompressible compression, the data from the ultrasonic transit time measurement for the prerun and the wall thickness being recorded with two different resolution ranges, into a rough resolution range for measurement values inside the tolerance band, a high resolution range for measurement values outside the tolerance band, the data format containing a bit, the prefix bit, which is not set in the case of a measurement value lying outside the tolerance band, and the data word, the value, belonging to the measurement value being completely stored, and which prefix bit is set in the case of at least two successive measurement values lying inside the tolerance band, and hence a multiplier counting process is interpreted for this value instead of the successive ones, characterised in that

   - the tolerance band is temporarily narrowed when a change in wall thickness is detected, so that the resolution of the measurement of the corrosion possibly existing in this region is not reduced;

   - a relatively long sequence from a failure of a sensor or from failures of sensors is shown by a multiplier, and the prefix bit prefixes a value associated with a measurement value, which is not physically significant in connection with the ultrasonic measurement using the measuring probe;

   - in a second stage of the compression, two or more successive compressed identical sets of data are compressed again by an identification value and a multiplication value;

   - a failure of a sensor in the prerun in connection with the measurement signifies a failure of a measurement value in respect of the wall thickness and, in consequence, the wall thickness value is considered to be a value inside the tolerance band, whereby a higher degree of compression results;

   - a particular prerun reference value is supplied for each individual sensor, and such value is constantly updated during a measuring operation by a continuous averaging of a specific number of prerun values and stored in a multiply redundant manner;

   - for the wall thickness measurement for all of the sensors of a probe, only one reference value, the wall thickness reference value, is maintained, which is constantly updated by a continuous arithmetic averaging of a specific number of successive sets of data during the probe operation, is thus continuously adapted to varying wall thicknesses and is stored in a multiply redundant manner, and all of the values of a set of data lying outside the tolerance band are used for the averaging process if there are more values than lie inside said band;

- echo failures, i.e. measurement value 0, are not used for reference values when taking the average value; and

- range excesses (measurement value 127) are not used when taking the average value.

2. Method according to claim 1, characterised in that the tolerance band is described by the prerun reference value and a window of a prescribed width, which window is placed symmetrically around said reference value.

3. Method according to claim 2, characterised in that the width of the tolerance band is so selected that it does not fall within the range of measurement values of corrosion locations which have to be detected on the basis of their advanced degree of corrosion.

4. Method according to claim 3, characterised in that, at the beginning of a test run, the reference values are produced by averaging over a predetermined number of sets of data, and the reference value calculation is effected parallel to the data detection and data compression.

5. Method according to claim 4, characterised in that, before the start of a data block which is to be stored, the reference values of the prerun are stored in two separate sets of data and, in consequence, become valid for the entire data block.

6. Method according to claim 5, characterised in that the actual wall reference value at any given time is added to every 10th set of data or to an appropriate number.

7. Method according to claim 6, characterised in that the compression of the data is effected in real time.

8. Method according to claim 1, characterised in that, in an alternatively additional compression stage, the reference values for the compression are formed from the chronologically preceding set of data and, depending on the degree of compression, a decision is made about the compression processes by which the compressed data is stored.


**Revendications**

1. Procédé de compression de données de mesure de temps de parcours ultrasons faites avec une fréquence de répétition prédéterminée et parcourant une surface, par une sonde de mesure se déplaçant dans un tuyau pour mesurer la corrosion et autres défauts du tuyau, un module de capteur à ultrasons pour un capteur à ultrasons déterminant le temps de parcours entre une impulsion d'émission et la première impulsion de retour de son qui en provient, c'est-à-dire l'écho de la paroi avant ainsi que le temps de parcours entre l'impulsion d'arrivée du son et un premier écho de la paroi arrière, à partir de la différence des temps de parcours entre l'impulsion d'émission et l'écho de la paroi avant, on détecte l'aller, et à partir de la différence de temps de parcours entre l'écho de la paroi avant et l'écho de la paroi arrière, on définit l'épaisseur résiduelle de paroi, et à partir des valeurs de mesure qui se situent à l'intérieur et à l'extérieur d'une bande de tolérances prédéterminée décrite par une valeur de référence et une fenêtre, et qui se situe dans des unités prédéterminées, symétriquement par rapport à la valeur de référence, attribuée à chaque capteur, et après conversion analogique/numérique, on forme des valeurs de données de même format et on fait subir à ces données une compression susceptible d'être décomprimée, les données de la mesure de temps de parcours par ultrasons pour l'aller et pour l'épaisseur de paroi étant enregistrées avec deux plages de résolution différentes, une plage de résolution grossière pour les valeurs de mesure à l'intérieur de la bande de tolérances et une plage de résolution élevée pour les valeurs de mesure à l'extérieur de la bande de tolérances, le format de données contenant un bit à savoir le bit de préfixe qui n'est pas mis à l'état dans le cas d'une valeur de mesure située à l'extérieur de la bande de tolérances et le mot de données, c'est-à-dire la valeur appartenant à la valeur de mesure, est enregistré complètement et ce bit de préfixe est mis l'état au cas où au moins deux valeurs de mesure successives se situent dans la bande de tolérances, et ainsi un comptage de multiplicateur est pris pour cette valeur à la place de valeurs successives, caractérisé en ce qu'

- en cas de variations d'épaisseur, reconnues, la bande de tolérances est rétrécie brièvement pour ne pas réduire la résolution de la mesure de l'éventuelle corrosion existant dans cette zone,

- une suite longue d'une défaillance de capteur ou de défaillance de plusieurs capteurs est représentée par un multiplicateur et le préfixe est mis à une valeur attribuée à la valeur de mesure qui en liaison avec la mesure à ultrasons par la sonde n'est pas physiquement intéressante,

- dans un second étage de compression, on comprime une nouvelle fois deux ou plusieurs jeux de données identiques comprimés successivement par une valeur caractéristique et une valeur de multiplication,

- une défaillance de capteur à la ligne, en relation avec la mesure signifie une disparition de la valeur de mesure pour l'épaisseur de paroi et ainsi la valeur de l'épaisseur de paroi est considérée comme valeur se situant dans la bande de tolérances, ce qui donne un degré de compression plus élevé,

- pour chaque capteur, on fournit une valeur de référence d'aller, propre, qui pendant le passage de la sonde est actualisée en permanence par la formation en continu d'une moyenne concernant un nombre déterminé de valeurs d'aller, et est mise en mémoire plusieurs fois de manière redondante,

- pour mesurer l'épaisseur de paroi, tous les capteurs de la sonde reçoivent une valeur de référence à savoir la valeur de référence de l'épaisseur de paroi qui est actualisée par la formation continue de la moyenne arithmétique d'un nombre défini de jeux de données successifs pendant le passage de la sonde et cette valeur est ainsi adaptée en continu aux épaisseurs de paroi variables et est enregistrée plusieurs fois de manière redondante et toutes les valeurs d'un jeu de données situées à l'extérieur de la bande de tolérances sont utilisées pour former la moyenne au cas où plusieurs valeurs se situent à l'intérieur,

- les cas d'échos, c'est-à-dire correspondant à une valeur de mesure 0, ne sont pas utilisés pour la valeur de référence lorsqu'on forme la valeur moyenne,

- des dépassements de plage (valeurs de mesure 127) ne sont pas utilisés lorsqu'on forme la valeur moyenne.

2. Procédé selon la revendication 1,
caractérisé en ce que
la bande de tolérances est décrite par la valeur de référence d'aller et par une fenêtre de largeur prédéterminée, disposée de manière symétrique.

3. Procédé selon la revendication 2,
caractérisé en qu'
on choisit la largeur de la bande de tolérances pour ne pas tomber dans la plage des valeurs de mesure des zones de corrosion qu'il faut détecter à cause de leur degré de corrosion avancé.

4. Procédé selon la revendication 3,
caractérisé en ce qu'
au début d'un parcours de contrôle, on génère les valeurs de référence en formant la moyenne d'un nombre prédéterminé de jeux de données et on calcule la valeur de référence en parallèle à la saisie des données et à leur compression.

5. Procédé selon la revendication 4,
caractérisé en ce qu'
on enregistre la valeur de référence de l'aller avant le début d'un bloc de données à enregistrer, dans deux jeux de données séparés et qui est ainsi valable pour l'ensemble du bloc de données.

6. Procédé selon la revendication 5,
caractérisé en ce qu'
à chaque dixième jeu de données ou à chaque nombre avantageux, on ajoute la valeur de référence de paroi instantanée.

7. Procédé selon la revendication 6,
caractérisé en ce qu'
on effectue la compression des données en temps réel.

8. Procédé selon la revendication 1,
caractérisé en ce que
suivant une variante, avec d'autres étages de compression, on forme la valeur de référence de compression à partir du jeu de données précédent dans le temps, et on décide du degré de compression selon lequel le procédé de compression selon lequel on enregistre les données comprimées.

# Fig. 1

Abstand

Rohrwanddicke

Vorlauffenster:            2

Wandstaerkefenster:        3

Referenzwert Wandst.:      50

| Sensor: | 1 | 2 | 3 | 4 | 5 | 6 | 7 | 8 | 9 | 10 | 11 | 12 | 13 | 14 | 15 | 16 |
|---|---|---|---|---|---|---|---|---|---|---|---|---|---|---|---|---|
| **Referenz:** Vorlauf | 40 | 41 | 42 | 3f | 40 | 41 | 42 | 42 | 41 | 40 | 3f | 3e | 41 | 42 | 40 | 40 |
| **Messwerte:** Vorlauf | 3e | 3f | 40 | 41 | 40 | 41 | 41 | 40 | 43 | 44 | 45 | 46 | 48 | 4c | 44 | 42 |
| Wandst.: | 50 | 51 | 51 | 50 | 51 | 50 | 51 | 50 | 4E | 4d | 4B | 4A | 47 | 44 | 49 | 4F |
| **Komprimiert:** Vorlauf | 88 | (Multiplikator 9) | | | | | | | | 44 | 45 | 46 | 48 | 4c | 44 | |
| Wandst.: | 8a | (Multiplikator 1 + 10) | | | | | | | | | 4b | 4a | 47 | 44 | 49 | 80 |
| **Dekomprimiert:** Vorlauf | 40 | 41 | 42 | 3f | 40 | 41 | 42 | 42 | 41 | 44 | 45 | 46 | 48 | 4c | 44 | 40 |
| Wandst.: | 50 | 50 | 50 | 50 | 50 | 50 | 50 | 50 | 50 | 50 | 4b | 4a | 47 | 44 | 49 | 50 |

Kompressionsfaktor = ( 2 * 16) / 14 = 2.28

Figur 2

(Alle Zahlen in hexadezimaler Darstellung)

EP 0 616 692 B1

Fig. 3

Azimutal Korrosionsausbreitung

Sensoren

Korrosionstiefe

Pipelinelänge

Vorlauf eines Sensors